# FASCICULE DE BREVET EUROPEEN

(11) **EP 4 342 346 B1**
(45) Date de publication et mention de la délivrance du brevet: **15.07.2026**
(21) Numéro de dépôt: 23197486.6
(22) Date de dépôt: 14.09.2023
(51) Int. Cl.: A47J 39/00, G05D 23/24, A47B 31/02

(54) **PROCEDE POUR GERER LA REMISE EN TEMPERATURE DE PLATEAUX-REPAS INSERES A L'INTERIEUR D'UN CHARIOT, INSTALLATION ET CHARIOT POUR LA MISE EN OEUVRE DE CE PROCEDE**
VERFAHREN ZUR STEUERUNG DER TEMPERATUR VON IN EINEM WAGEN EINGESETZTEN ESSGESCHIRREN, ANLAGE UND WAGEN ZUR DURCHFÜHRUNG DES VERFAHRENS
METHOD FOR MANAGING THE RE-HEATING OF MEAL TRAYS INSERTED INSIDE A TROLLEY, INSTALLATION AND TROLLEY FOR IMPLEMENTING SAID METHOD

(30) Priorité: 22.09.2022 FR 2209580
(43) Date de publication de la demande: 27.03.2024
(73) Titulaire: Electro Calorique, 69330 Pusignan (FR)
(72) Inventeur: BROSSAT, JEROME, 69300 CALUIRE ET CUIRE (FR); LAUZERAL, SYLVAIN, 63300 THIERS (FR)
(74) Mandataire: Cabinet Beau de Loménie

(56) Documents cités:
- EP-A1- 2 123 191
- FR-A1- 2 727 838
- FR-B1- 2 831 682
- US-A1- 2008 213 449

## Description

### Domaine Technique

La présente invention concerne le domaine du transport et de la distribution de repas à l'aide de plateaux, sur lesquels sont disposés des mets et divers ustensiles nécessaires à la consommation des aliments.

L'objet de l'invention concerne plus précisément la gestion de la remise en température des plateaux-repas placés à l'intérieur d'un chariot isotherme de transport.

L'objet de l'invention trouve une application particulièrement avantageuse mais non exclusivement dans le domaine du transport et de la distribution de plateaux-repas en particulier dans le secteur de la santé et dans les établissements pénitentiaires.

### Technique antérieure

D'une manière habituelle, un plateau-repas est destiné à recevoir des mets froids et chauds placés dans des récipients adaptés à la nature des aliments. Selon le procédé dit en liaison chaude, les mets chauds sont, dès leur préparation, acheminés et conservés à la température de consommation jusqu'au moment de leur distribution au consommateur. Dans le procédé dit en liaison froide, les mets chauds sont mis à la température de consommation juste avant leur distribution au consommateur, dans la mesure où ils ont été rapidement refroidis dès la fin de leur préparation, en vue d'un stockage au froid pouvant atteindre plusieurs jours.

Le transport et la distribution de tels plateaux-repas s'effectuent généralement à l'aide de chariots isothermes aménagés pour offrir deux compartiments séparés dont l'un est destiné à recevoir les plateaux pourvus des ustensiles et des mets froids, tandis que l'autre reçoit les récipients contenant les mets chauds. Le compartiment dit chaud est équipé de moyens de chauffage permettant de placer et de maintenir les mets chauds à leur température de consommation. Selon l'exemple de réalisation décrit par le brevet FR 2 831 682, les moyens de chauffage sont des plaques de chauffage superposées permettant chacune une remise en température individuelle des mets chauds du plateau-repas placé en relation de la plaque de chauffage.

Ce chariot isotherme de transport comporte une unité de contrôle permettant de commander le fonctionnement des plaques de chauffage. Cette unité de contrôle est reliée à des moyens permettant de détecter la présence des plateaux-repas de manière à inhiber le fonctionnement des plaques de chauffage vis-à-vis desquelles le plateau-repas est absent. Ces moyens de détection de la présence des plateaux-repas permettent de réduire la consommation énergétique des chariots isothermes de transport. Cependant, les conditions réelles d'utilisation de ce chariot isotherme de transport restent inconnues. En effet, dans un service devant servir des plateaux-repas, la capacité des chariots isothermes de transport est généralement adaptée au nombre de plateaux-repas à distribuer. Cependant, en pratique, il arrive fréquemment que des plateaux-repas soient ajoutés ou retirés de ces chariots, avant leur remise en température. Il s'ensuit une difficulté pour optimiser l'opération de remise en température des plateaux-repas insérés dans les chariots isothermes de transport. Il apparait notamment une difficulté pour choisir la capacité de ces chariots par rapport au nombre réel de plateaux-repas à remettre en température dans ces chariots. De plus, il s'avère que la puissance de l'alimentation électrique pour ces chariots n'est pas adaptée à la puissance nécessaire pour la remise en température des chariots.

### Exposé de l'invention

L'objet de l'invention vise donc à remédier aux inconvénients de l'art antérieur en proposant un procédé permettant d'optimiser l'opération de remise en température des plateaux-repas d'un chariot isotherme de transport.

Un autre objet de l'invention est de proposer un procédé pour gérer la remise en température des plateaux-repas offrant des conditions d'exploitation flexibles pour ces chariots isothermes de transport.

Pour atteindre ces objectifs, le procédé conforme à l'invention vise à gérer la remise en température de plateaux-repas insérés à l'intérieur d'un chariot isotherme de transport de plateaux-repas, selon le procédé:
* on met à disposition au moins un chariot isotherme de transport comportant une série de plaques de chauffage superposées, configurées pour assurer chacune la remise en température individuelle d'un plateau-repas inséré à l'intérieur du chariot isotherme de transport,
* on pilote le fonctionnement des plaques de chauffage pour assurer une remise en température des plateaux-repas,
* on détecte les plaques de chauffage utilisées pour réaliser une remise en température effective des plateaux-repas,
* et on compte les plaques de chauffage utilisées pour réaliser une remise en température effective des plateaux-repas.

Selon une caractéristique de mise en œuvre, pour détecter la présence d'un plateau-repas positionné pour être remis en température par une plaque de chauffage, on analyse l'évolution de la température de la plaque de chauffage.

Selon la caractéristique préférée de mise en œuvre, on analyse l'évolution de la température de la plaque de chauffage en la comparant avec au moins une évolution de référence de la température de la plaque de chauffage.

Avantageusement, on compare l'évolution de la température de la plaque de chauffage avec au moins :
* une évolution de référence de la température de la plaque de chauffage pour laquelle le plateau-repas est absent,
* une évolution de référence de la température de la plaque de chauffage pour laquelle le plateau-repas est présent,
* et une évolution de référence de la température de la plaque de chauffage pour laquelle le plateau-repas ne comporte pas de mets à remettre en température.

Selon une caractéristique de fonctionnement, on pilote le fonctionnement de toutes les plaques de chauffage et on interrompt le fonctionnement des plaques de chauffage pour chacune d'entre elles dont l'évolution de la température de la plaque de chauffage ne correspond pas à une évolution de référence de la température de la plaque de chauffage pour laquelle le plateau-repas est présent.

Selon une autre caractéristique de fonctionnement, pour chaque plaque de chauffage, on détecte avant sa commande en fonctionnement, la présence d'un plateau-repas positionné pour être remis en température par ladite plaque de chauffage, et on pilote en fonctionnement uniquement les plaques de chauffage pour lesquelles les plateaux-repas sont positionnés pour être remis en température.

Selon une caractéristique avantageuse de l'invention, pour détecter les plaques de chauffage utilisées pour réaliser une remise en température effective des plateaux-repas, on détermine les plaques de chauffage utilisées pendant une durée déterminée et/ ou atteignant une température déterminée.

Par exemple, on détermine les plaques de chauffage utilisées pour réaliser la remise en température effective des plateaux-repas, à partir d'une durée de temps de fonctionnement de la plaque de chauffage comprise entre 2 et 10 minutes.

Avantageusement, chaque chariot isotherme de transport de plateaux-repas transmet à un centre de gestion centralisé, le nombre de plaques de chauffage utilisées pour réaliser une remise en température effective des plateaux-repas.

De préférence, le centre de gestion centralisé détermine en fonction du nombre de plaques de chauffage utilisées pour réaliser une remise en température effective des plateaux-repas, un coût d'utilisation du chariot isotherme de transport.

Un autre objet de l'invention est de proposer un chariot isotherme de transport de plateaux-repas comportant :
* une enveloppe isolante délimitant intérieurement au moins un compartiment **accessible** par au moins une porte,
* une structure de support aménagée à l'intérieur de l'enceinte, pour maintenir, en position superposée, des plateaux-repas,
* une série de plaques de chauffage individuelles d'un plateau-repas maintenus en position par la structure de support,
* un système pour gérer la remise en température des plateaux-repas par les plaques de chauffage, ce système comportant:
   .un dispositif de détection pour chaque plaque de chauffage, de la présence d'un plateau-repas positionné pour être remis en température par ladite plaque de chauffage,
   .une unité de contrôle configurée pour assurer :
      .. le fonctionnement des plaques de chauffage pour assurer une remise en température des plateaux-repas,
      ..la détection des plaques de chauffage utilisées pour réaliser une remise en température effective des plateaux-repas,
      ..le comptage des plaques de chauffage utilisées pour réaliser une remise en température effective des plateaux-repas.

Selon une caractéristique préférée de réalisation, le chariot isotherme de transport de plateaux-repas comporte en tant que dispositif de détection de la présence d'un plateau-repas, une sonde de température associée à chaque plaque de chauffage et reliée à l'unité de contrôle, l'unité de contrôle analysant l'évolution de la température de la plaque de chauffage et la comparant avec au moins une évolution de référence de la température de la plaque de chauffage, en vue d'assurer le fonctionnement des plaques de chauffage pour assurer une remise en température effective des plateaux-repas, au moins pour les plaques de chauffage pourvues d'un plateau-repas.

De préférence, l'unité de contrôle délivre une information sur le nombre de plaques de chauffage utilisées pour réaliser une remise en température effective des plateaux-repas.

Avantageusement, l'unité de contrôle comporte un circuit de communication avec un centre de gestion centralisé.

Un autre objet de l'invention est de proposer une installation de gestion pour gérer la remise en température de plateaux-repas insérés à l'intérieur d'au moins un chariot isotherme de transport de plateaux-repas , cette installation comportant au moins un centre de gestion centralisé communiquant avec le circuit de communication d'au moins un chariot isotherme de transport de plateaux-repas, de manière à recevoir dudit chariot, au moins l'information sur le nombre de plaques de chauffage utilisées pour réaliser une remise en température effective des plateaux-repas.

Avantageusement, le centre de gestion centralisé fournit pour chaque chariot isotherme de transport, un coût d'utilisation du chariot isotherme de transport en fonction du nombre de plaques de chauffage utilisées pour réaliser une remise en température effective des plateaux-repas.

### Brève description des dessins

[Fig. 1] La figure 1 est une vue schématique en perspective montrant un exemple de réalisation d'un chariot isotherme de transport mettant en œuvre l'invention.
[Fig. 2] La figure 2 est un schéma bloc fonctionnel illustrant un système pour gérer la remise en température des plateaux-repas d'un chariot isotherme de transport mettant en œuvre l'invention.
[Fig. 3] La figure 3 est un graphique donnant l'évolution de la température de la plaque de chauffage en fonction de la présence ou non d'un plateau-repas.

### Description des modes de réalisation

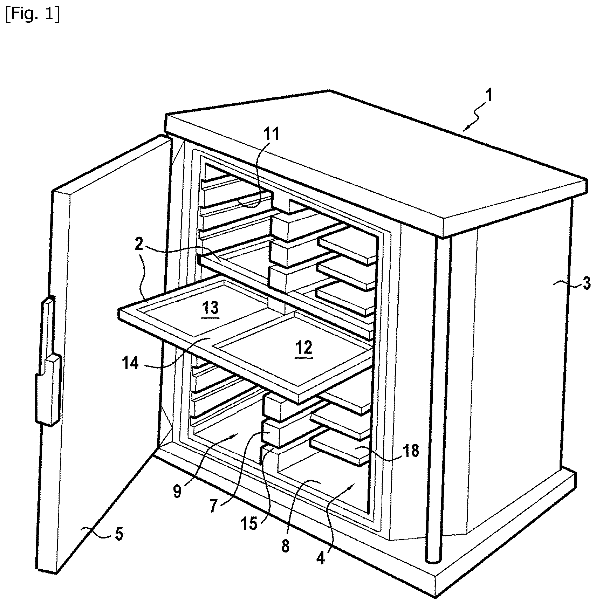

Tel que cela ressort plus précisément de la figure 1, l'objet de l'invention met en œuvre au moins un chariot isotherme 1 constituant une unité de stockage et/ou de transport d'une série de plateaux-repas 2. D'une manière classique, le chariot 1 comporte un caisson ou une enveloppe isolante 3 délimitant intérieurement au moins un, et dans l'exemple illustré, deux logements 4 accessibles à partir des deux côtés opposés du chariot et fermés chacun par au moins une porte 5.

De manière habituelle, le chariot 1 est adapté de manière à permettre un refroidissement des logements 4. A cet effet, le chariot 1 peut être pourvu d'un système de production de froid ou peut être raccordé à tout système permettant de refroidir les logements 4. Chaque logement 4 est pourvu intérieurement d'une cloison isolante de séparation 7 délimitant de part et d'autre, un compartiment dit chaud 8 et un compartiment dit froid 9.

De manière classique, le chariot 1 est équipé d'une structure 11 de support et de guidage des plateaux-repas 2. Typiquement, cette structure de support 11 est formée par tous éléments aménagés de manière superposée sur les parois des compartiments, de manière à permettre de maintenir les plateaux-repas à différents niveaux superposés à l'intérieur de chaque logement 4. Typiquement, cette structure de support 11 comporte des rainures formant des glissières de coulissement pour les plateaux-repas 2.

Chaque plateau-repas 2 comporte une première partie 12 délimitée dans l'exemple illustré par une grande alvéole et une deuxième partie 13 délimitée dans l'exemple illustré, par une petite alvéole. Chaque plateau-repas 2 comporte une zone de jonction 14 entre les alvéoles 12 et 13. Chaque plateau-repas 2 est destiné à être engagé dans un logement 4 de manière que la zone de jonction 14 se trouve placée en face de la cloison de séparation 7 qui présente des fentes superposées 15 de manière à permettre l'introduction et le passage des plateaux-repas 2. Bien entendu, l'objet de l'invention peut être mis en œuvre avec des plateaux-repas 2 présentant une première partie 12 et une deuxième partie 13 aménagées de manière différente et de toute manière appropriée en fonction des mets et des ustensiles utilisés.

Comme cela ressort plus précisément de la figure 1, chaque plateau-repas 2 se trouve positionné à l'intérieur de chaque logement 4, de manière que la zone de jonction 14 se trouve placée à l'aplomb de la cloison isolante de séparation 7, de sorte que la première partie 12 et la deuxième partie 13 s'étendent respectivement dans un compartiment chaud 8 et froid 9. Le positionnement de la première partie 12 et de la deuxième partie 13 dans les compartiments chaud 8 et froid 9 dépend des mets chauds ou froids placés à l'intérieur de ces parties de plateaux-repas. Comme illustré à la Fig. 1, la première partie 12 du plateau repas 2 est destinée à être placée à l'intérieur du compartiment chaud 8 tandis que la deuxième partie 13 de ce plateau-repas 2 est destinée à être placée dans le compartiment froid 9. Bien entendu, la première partie 12 et la deuxième partie 13 des plateaux-repas sont aménagées en fonction de la taille des compartiments chaud 8 et froid 9.

Le chariot 1 est équipé d'une série de plaques de chauffage 18 assurant un chauffage individuel pour chaque plateau-repas 2 pour permettre leur remise en température. Plus précisément, chaque plaque de chauffage 18 est adaptée pour remettre en température la partie chaude des plateaux-repas c'est-à-dire les mets disposés sur la première partie 12 des plateaux-repas. Les plaques de chauffage 18 sont montées à l'intérieur du compartiment chaud 8 pour s'étendre de manière superposée, au-dessous (voire au-dessus) de chaque niveau de réception d'un plateau-repas.

Les plaques de chauffage 18 sont réalisées de toute manière appropriée. Par exemple, les plaques de chauffage 18 sont réalisées par des plaques résistives ou inductives s'étendant à l'intérieur du compartiment chaud 8 de manière que la face inférieure de la première partie 12 de chaque plateau-repas 2 se trouve en contact avec la face supérieure d'une plaque de chauffage 18. Les plaques de chauffage 18 peuvent aussi être réalisées chacune par une plaque munie d'un élément chauffant se présentant sous la forme d'un film ou d'une résistance tubulaire.

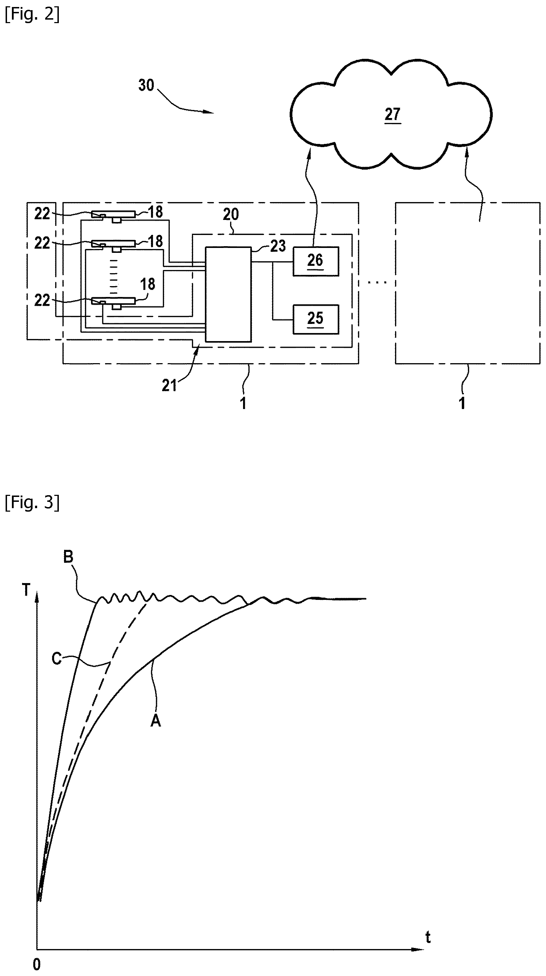

Tel que cela ressort plus précisément de la figure 2, le chariot 1 conforme à l'invention comporte un système 20 pour gérer la remise en température des plateaux-repas par les plaques de chauffage 18. Ce système de gestion 20 comporte un dispositif de détection 21 adapté pour détecter pour chaque plaque de chauffage 18, la présence d'un plateau-repas 2. En d'autres termes, le dispositif de détection 21 permet de détecter pour chaque plaque de chauffage 18, si un plateau-repas 2 est positionné pour être remis en température par ladite plaque de chauffage 18.

Selon un exemple préféré de réalisation illustré sur les dessins, le chariot 1 comporte en tant que dispositif de détection 21, une sonde de température 22 associée à chaque plaque de chauffage 18. Par exemple, chaque plaque de chauffage 18 comporte une sonde de température telle qu'une thermistance de type NTC dont la résistance diminue lorsque la température augmente. Cette sonde de température est fixée à la plaque de chauffage par exemple par une pastille en silicone.

Les sondes de température 22 des plaques de chauffage 18 sont reliées à une unité de contrôle 23 analysant l'évolution de la température de la plaque de chauffage mesurée par la sonde de température 22 associée. L'unité de contrôle 23 compare cette évolution de la température de la plaque de chauffage avec au moins une évolution de référence de la température de la plaque de chauffage pour déterminer la présence ou non d'un plateau-repas 2, positionné pour être remis en température.

En effet, il doit être considéré que la température de la plaque de chauffage 18 évolue différemment en fonction de la présence ou non d'un plateau-repas sur la plaque de chauffage. La figure 3 illustre à titre d'exemple l'évolution au cours du temps t, de la température T de la plaque de chauffage 18 en présence d'un plateau-repas 2 (courbe A) et en l'absence d'un plateau-repas 2 (courbe B). Il ressort de ces courbes que la température de la plaque de chauffage 18 augmente beaucoup plus rapidement en cas d'absence d'un plateau-repas 2 par rapport à une plaque de chauffage 18 pourvu d'un plateau-repas. Cela s'explique par le fait que le plateau-repas et les mets absorbent la chaleur de sorte que la plaque de chauffage 18 avec un plateau-repas chauffe moins rapidement qu'une plaque de chauffage dépourvue d'un plateau-repas.

Avantageusement, la figure 3 illustre à titre d'exemple l'évolution au cours du temps, de la température de la plaque de chauffage 18 en présence d'un plateau-repas 2 vide c'est-à-dire dépourvu des aliments (courbe C). La température d'une telle plaque de chauffage 18 augmente plus rapidement par rapport à une plaque de chauffage 18 pourvue d'un plateau-repas 2 mais plus lentement par rapport à une plaque de chauffage 18 dépourvue d'un plateau-repas 2.

Avantageusement, un tel système de détection 21 analyse la variation de la température des plaques de chauffage 18 au cours d'un intervalle de temps, pour détecter, la présence d'un plateau-repas, l'absence d'un plateau-repas ou la présence d'un plateau-repas vide. Bien entendu, le chariot 1 peut être équipé d'un système de détection 21 de type différent pour détecter la présence ou l'absence d'un plateau-repas en relation des plaques de chauffage, comme celui par exemple décrit par le brevet FR 2 831 682. Chaque plaque de chauffage 18 est reliée à un élément mécanique présent dans la cloison de séparation 7 ou dans la zone de jonction 14 qui détecte la présence du plateau et déclenche la mise sous tension de la plaque de chauffage. L'insertion du plateau dans le chariot isotherme active mécaniquement la mise sous tension des plaques de chauffage 18.

Grace à un tel système de détection 21, l'unité de contrôle 23 permet de piloter le fonctionnement des plaques de chauffage 18 vis-à-vis desquelles sont positionnés des plateaux-repas avec des aliments à réchauffer.

Selon une caractéristique avantageuse, l'unité de contrôle 23 est configurée pour détecter les plaques de chauffage 18 utilisées pour réaliser une remise en température dite effective des plateaux-repas. Il est à considérer que l'opération de remise en température consiste à amener les mets de la partie chaude des plateaux-repas (première partie 12), à une température dite de distribution à laquelle le plateau-repas est prêt à être distribué à l'utilisateur final. Cependant, cette opération de remise en température d'un plateau-repas peut être interrompue avant son terme pour diverses raisons liées à l'exploitation du chariot. Aussi, l'unité de contrôle 23 détecte qu'une plaque de chauffage 18 a réalisé une opération de remise en température même si l'opération de remise en température n'est pas arrivée à son terme.

L'unité de contrôle 23 détecte ainsi pour chacune des plaques de chauffage 18, qu'une opération de remise en température a eu lieu c'est-à-dire qu'elle est effective, au terme d'une durée prédéfinie de fonctionnement ou pour une valeur prédéfinie de température détectée par la sonde de température 22. Cette durée prédéfinie de fonctionnement ou cette valeur prédéfinie de température est bien entendu inférieure à la valeur pour obtenir la remise en température du plateau-repas à sa température de distribution. Par exemple, il peut être considéré que l'unité de contrôle 23 détecte pour une plaque de chauffage 18, qu'une opération de remise en température est effective si la plaque de chauffage 18 fonctionne pendant une durée de chauffage comprise entre 2 et 10 minutes. A titre d'exemple, une opération de remise en température est considérée comme effective si la plaque de chauffage 18 fonctionne pendant une durée de chauffage de 5 minutes alors qu'une opération complète de remise en température dure autour de 45 minutes. En d'autres termes, même si l'opération de remise en température est interrompue avant son terme mais a dépassé une durée par exemple de 5 minutes, l'unité de contrôle 23 considère que cette plaque de chauffage 18 a effectué une remise en température effective.

Il est à noter qu'il peut être considéré qu'une remise en température des plateaux-repas est également effective pour les plaques de chauffage 18 atteignant une température prédéfinie. En d'autres termes, dès qu'une plaque de chauffage 18 atteint une température prédéfinie détectée par la sonde de température 22, alors cette plaque de chauffage est considérée comme ayant réalisée une remise en température effective du plateau-repas associé. Bien entendu, il est possible de combiner ce critère de température des plaques de chauffage avec le critère de durée de fonctionnement des plaques de chauffage pour caractériser une remise en température effective d'un plateau-repas.

Selon une autre caractéristique de l'invention, l'unité de contrôle 23 est configurée pour compter le nombre des plaques de chauffage 18 utilisées pour réaliser une remise en température effective des plateaux-repas. L'unité de contrôle 23 compte ainsi les plaques de chauffage 18 ayant réalisées une opération de remise en température effective des plateaux-repas, correspondant comme expliqué ci-dessus, à une durée prédéfinie de fonctionnement ou à l'atteinte d'une température prédéfinie. Ce comptage prend en compte ainsi les plaques de chauffage 18 ayant réalisées une remise en température incomplète mais également les plaques de chauffage 18 ayant réalisées une remise en température complète des plateaux-repas. A contrario, l'unité de contrôle 23 ne prend pas en compte les plaques de chauffage 18 commandées en fonctionnement selon une durée inférieure à la durée prédéfinie de fonctionnement ou n'ayant pas permis d'atteindre la température prédéfinie. L'unité de contrôle 23 délivre ainsi une information sur le nombre de plaques de chauffage 18 utilisées pour réaliser une remise en température effective des plateaux-repas, conformément à la définition donnée ci-dessus.

Il est à noter que l'unité de contrôle 23 peut comporter une unité d'affichage 25 permettant d'afficher au moins le nombre de plaques de chauffage 18 utilisées pour réaliser la remise en température effective des plateaux-repas. Selon cet exemple de réalisation, le chariot 1 est équipé de l'unité de contrôle 23 dont l'unité d'affichage 25 est montée en tous endroits appropriés pour être visible par un utilisateur d'un chariot. Cette unité d'affichage 25 peut également afficher la puissance consommée par exemple. Avantageusement, l'unité de contrôle 23 enregistre le nombre de plaques de chauffage 18 utilisées pour réaliser une remise en température effective des plateaux-repas. De manière classique, l'unité de contrôle 23 est architecturé autour d'au moins un microcontrôleur ou microprocesseur associé à des interfaces d'entrées/sorties et à des mémoires.

Selon une caractéristique avantageuse de réalisation, l'unité de contrôle 23 comporte un circuit de communication 26 avec un centre de gestion centralisé 27. Le circuit de communication 26 communique au centre de gestion centralisé 27, au moins le nombre de plaques de chauffage 18 utilisées pour réaliser la remise en température effective des plateaux-repas. Le circuit de communication 26 de l'unité de contrôle 23 communique avec le centre de gestion centralisé 27 de toute manière appropriée, par une liaison filaire ou sans fil. Par exemple, le centre de gestion centralisé 27 fait partie d'un réseau numérique....

Tel que cela ressort de la figure 2, il en découle une installation de gestion 30 pour gérer la remise en température de plateaux-repas insérés à l'intérieur d'au moins un chariot isotherme de transport 1 conforme à l'invention. Cette installation de gestion 30 comporte au moins un centre de gestion centralisé 27 communiquant avec le circuit de communication 26 d'au moins un chariot isotherme 1 de transport de plateaux-repas. Bien entendu, le centre de gestion centralisé 27 communique avec les circuits de communication 26 de plusieurs chariots isothermes 1 de transport de plateaux-repas, constituant ensemble au moins une flotte de chariots exploités sur un site. Le centre de gestion centralisé 27 reçoit ainsi de chaque chariot, au moins l'information sur le nombre de plaques de chauffage 18 utilisées pour réaliser une remise en température effective des plateaux-repas.

Selon une caractéristique avantageuse de réalisation, le centre de gestion centralisé 27 fournit pour chaque chariot isotherme de transport, un coût d'utilisation du chariot isotherme de transport en fonction du nombre de plaques de chauffage 18 utilisées pour réaliser la remise en température effective des plateaux-repas. A titre d'exemple, un prix unitaire est attribué pour chaque utilisation d'une plaque chauffage 18.

La description du chariot et de l'installation permettent de mettre en œuvre un procédé pour gérer la remise en température de plateaux-repas 2 qui découle directement de la description qui précède.

Le procédé selon l'invention vise à détecter les plaques de chauffage 18 utilisées pour permettre une remise en température des plateaux-repas 2 insérés à l'intérieur d'un chariot isotherme de transport 1. Après la commande en fonctionnement des plaques de chauffage 18 pour assurer une remise en température des plateaux-repas, le procédé vise à détecter les plaques de chauffage 18 utilisées pour réaliser une remise en température effective des plateaux-repas. Le procédé vise ensuite à compter les plaques de chauffage 18 utilisées pour réaliser une remise en température effective des plateaux-repas.

Selon une variante avantageuse de réalisation, le procédé consiste, pour détecter la présence d'un plateau-repas 2 positionné pour être remis en température par une plaque de chauffage 18, à analyser l'évolution de la température de la plaque de chauffage. En effet, il apparait que la température de la plaque de chauffage change en fonction de la présence ou non d'un plateau-repas.

Le procédé vise ainsi à analyser l'évolution de la température de la plaque de chauffage 18 en la comparant avec au moins une évolution de référence de la température de la plaque de chauffage. Ainsi, l'évolution de la température de la plaque de chauffage 18 est comparée avec une évolution connue de la température de la plaque de chauffage, en fonction de la présence ou non du plateau-repas. Typiquement, le procédé vise à comparer l'évolution de la température de la plaque de chauffage 18 avec:
* une évolution de référence de la température de la plaque de chauffage pour laquelle le plateau-repas est absent,
* une évolution de référence de la température de la plaque de chauffage pour laquelle le plateau-repas est présent,
* et une évolution de référence de la température de la plaque de chauffage pour laquelle le plateau-repas ne comporte pas d'aliments à réchauffer.

La figure 3 illustre à titre d'exemple l'évolution de référence au cours du temps, de la température de la plaque de chauffage 18 en présence d'un plateau-repas 2 (courbe A), en l'absence d'un plateau-repas 2 (courbe B) et en présence d'un plateau-repas 2 vide c'est-à-dire dépourvu d'aliments à réchauffer (courbe C).

L'analyse de l'évolution de la température de la plaque de chauffage 18 c'est-à-dire de la vitesse d'évolution de la température de la plaque de chauffage permet de savoir si la plaque de chauffage est en présence ou non d'un plateau-repas ou d'un plateau-repas vide.

Selon la variante de réalisation avantageuse mise en œuvre, le procédé vise à piloter le fonctionnement de toutes les plaques de chauffage 18 et à interrompre le fonctionnement des plaques de chauffage pour chacune d'entre elles dont l'évolution de la température de la plaque de chauffage ne correspond pas à une évolution de référence de la température de la plaque de chauffage pour laquelle le plateau-repas est présent. En d'autres termes, dès qu'est détecté l'absence d'un plateau-repas, le fonctionnement de la plaque de chauffage associée est arrêté. De plus, il peut être prévu que dès qu'est détecté un plateau-repas vide, le fonctionnement de la plaque de chauffage 18 associée est arrêté.

Il est à noter que le procédé selon l'invention peut être mis en œuvre avec un système différent de détection de la présence des plateaux-repas. Selon cette autre variante de réalisation, pour chaque plaque de chauffage 18, on détecte avant sa commande en fonctionnement, la présence d'un plateau-repas 2 positionné pour être remis en température par ladite plaque de chauffage, et on pilote en fonctionnement uniquement les plaques de chauffage 18 pour lesquelles les plateaux-repas 2 sont positionnés pour être remis en température.

Selon une caractéristique de l'invention, le procédé consiste à détecter les plaques de chauffage 18 utilisées pour réaliser une remise en température effective des plateaux-repas. Afin de détecter les plaques de chauffage 18 utilisées pour réaliser une remise en température effective des plateaux-repas, le procédé consiste à déterminer les plaques de chauffage utilisées pendant une durée déterminée et/ ou atteignant une température déterminée.

Typiquement, le procédé détermine les plaques de chauffage utilisées pour réaliser la remise en température effective des plateaux-repas, à partir d'une durée de temps de fonctionnement de la plaque de chauffage comprise entre 2 et 10 minutes. Ainsi, toutes les plaques de chauffage 18 ayant fonctionnées pendant cette durée minimum prédéfinie sont considérées comme ayant réalisé la remise en température effective des plateaux-repas.

Avantageusement, le procédé permet que chaque chariot isotherme de transport 1 de plateaux-repas enregistre le nombre de plaques de chauffage 18 utilisées pour réaliser la remise en température effective des plateaux-repas.

Selon une caractéristique avantageuse, le procédé vise à transmettre à un centre de gestion centralisé 27, le nombre de plaques de chauffage 18 utilisées pour réaliser la remise en température effective des plateaux-repas.

Le centre de gestion centralisé 27 détermine en fonction du nombre de plaques de chauffage 18 utilisées pour réaliser la remise en température effective des plateaux-repas, un coût d'utilisation du chariot isotherme de transport. Ce coût d'utilisation du chariot isotherme de transport est par exemple transmis à l'exploitant du chariot. Il est à noter qu'un tel procédé offre la possibilité de louer de tels chariots isothermes de transport et de facturer à l'exploitant, un coût en fonction du nombre de plateaux-repas remis en température effective.

## Revendications

1. Procédé pour gérer la remise en température de plateaux-repas (2) insérés à l'intérieur d'un chariot isotherme de transport (1) de plateaux-repas, selon le procédé:
* on met à disposition au moins un chariot isotherme de transport (1) comportant une série de plaques de chauffage (18) superposées, configurées pour assurer chacune la remise en température individuelle d'un plateau-repas (2) inséré à l'intérieur du chariot isotherme de transport,
* on pilote le fonctionnement des plaques de chauffage (18) pour assurer une remise en température des plateaux-repas,
* on détecte les plaques de chauffage (18) utilisées pour réaliser une remise en température effective des plateaux-repas,
* et on compte les plaques de chauffage (18) utilisées pour réaliser une remise en température effective des plateaux-repas.

2. Procédé selon la revendication 1 selon lequel, pour détecter la présence d'un plateau-repas (2) positionné pour être remis en température par une plaque de chauffage (18), on analyse l'évolution de la température de la plaque de chauffage.

3. Procédé selon la revendication 2 selon lequel on analyse l'évolution de la température de la plaque de chauffage (18) en la comparant avec au moins une évolution de référence de la température de la plaque de chauffage.

4. Procédé selon la revendication 3 selon lequel on compare l'évolution de la température de la plaque de chauffage (18) avec au moins :
* une évolution de référence de la température de la plaque de chauffage pour laquelle le plateau-repas est absent,
* une évolution de référence de la température de la plaque de chauffage pour laquelle le plateau-repas est présent,
* et une évolution de référence de la température de la plaque de chauffage pour laquelle le plateau-repas ne comporte pas de mets à remettre en température.

5. Procédé selon l'une des revendications 1 à 4 selon lequel on pilote le fonctionnement de toutes les plaques de chauffage (18) et on interrompt le fonctionnement des plaques de chauffage pour chacune d'entre elles dont l'évolution de la température de la plaque de chauffage ne correspond pas à une évolution de référence de la température de la plaque de chauffage pour laquelle le plateau-repas est présent.

6. Procédé selon la revendication 1 selon lequel pour chaque plaque de chauffage (18), on détecte avant sa commande en fonctionnement, la présence d'un plateau-repas positionné pour être remis en température par ladite plaque de chauffage, et on pilote en fonctionnement uniquement les plaques de chauffage pour lesquelles les plateaux-repas (2) sont positionnés pour être remis en température.

7. Procédé selon l'une des revendications précédentes selon lequel pour détecter les plaques de chauffage (18) utilisées pour réaliser une remise en température effective des plateaux-repas, on détermine les plaques de chauffage utilisées pendant une durée déterminée et/ ou atteignant une température déterminée.

8. Procédé selon l'une des revendications précédentes selon lequel on détermine les plaques de chauffage utilisées pour réaliser la remise en température effective des plateaux-repas, à partir d'une durée de temps de fonctionnement de la plaque de chauffage comprise entre 2 et 10 minutes.

9. Procédé selon l'une des revendications précédentes selon lequel chaque chariot isotherme de transport (1) de plateaux-repas transmet à un centre de gestion centralisé (27), le nombre de plaques de chauffage (18) utilisées pour réaliser une remise en température effective des plateaux-repas.

10. Procédé selon l'une des revendications précédentes selon lequel le centre de gestion centralisé (27) détermine en fonction du nombre de plaques de chauffage (18) utilisées pour réaliser une remise en **température** effective des plateaux-repas, un coût d'utilisation du chariot isotherme de transport.

11. Chariot isotherme de transport de plateaux-repas comportant :
* une enveloppe isolante (3) délimitant intérieurement au moins un compartiment (8) accessible par au moins une porte (5),
* une structure de support (11) aménagée à l'intérieur de l'enceinte, pour maintenir, en position superposée, des plateaux-repas (2),
* une série de plaques de chauffage (18) individuelles d'un plateau-repas maintenus en position par la structure de support (11),
* un système (20) pour gérer la remise en température des plateaux-repas par les plaques de chauffage (18), ce système comportant:
.un dispositif de détection (21) pour chaque plaque de chauffage, de la présence d'un plateau-repas positionné pour être remis en température par ladite plaque de chauffage,
.une unité de contrôle (23) configurée pour assurer :
.. le fonctionnement des plaques de chauffage (18) pour assurer une remise en température des plateaux-repas,
..la détection des plaques de chauffage (18) utilisées pour réaliser une remise en température effective des plateaux-repas,
..le comptage des plaques de chauffage (18) utilisées pour réaliser une remise en température effective des plateaux-repas.

12. Chariot isotherme de transport de plateaux-repas selon la revendication précédente comportant en tant que dispositif de détection (21) de la présence d'un plateau-repas, une sonde de température (22) associée à chaque plaque de chauffage (18) et reliée à l'unité de contrôle (23), l'unité de contrôle (23) analysant l'évolution de la température de la plaque de chauffage et la comparant avec au moins une évolution de référence de la température de la plaque de chauffage, en vue d'assurer le fonctionnement des plaques de chauffage pour assurer une remise en température effective des plateaux-repas, au moins pour les plaques de chauffage pourvues d'un plateau-repas.

13. Chariot isotherme de transport de plateaux-repas selon l'une des revendications 11 ou 12 selon lequel l'unité de contrôle (23) délivre une information sur le nombre de plaques de chauffage utilisées pour réaliser une remise en température effective des plateaux-repas.

14. Chariot isotherme de transport de plateaux-repas selon l'une des revendications 11 à 13 selon lequel l'unité de contrôle comporte un circuit de communication (26) avec un centre de gestion centralisé (27).

15. Installation de gestion pour gérer la remise en température de plateaux-repas insérés à l'intérieur d'au moins un chariot isotherme de transport (1) de plateaux-repas (2) conforme à l'une des revendications 11 à 14, cette installation comportant au moins un centre de gestion centralisé (27) communiquant avec le circuit de communication (26) d'au moins un chariot isotherme de transport de plateaux-repas, de manière à recevoir dudit chariot, au moins l'information sur le nombre de plaques de chauffage utilisées pour réaliser une remise en température effective des plateaux-repas.

16. Installation selon la revendication précédente selon laquelle le centre de gestion centralisé (27) fournit pour chaque chariot isotherme de transport (1), un coût d'utilisation du chariot isotherme de transport en fonction du nombre de plaques de chauffage (18) utilisées pour réaliser une remise en température effective des plateaux-repas.

## Patentansprüche

1. Verfahren zum Verwalten des Aufwärmens von Essenstabletts (2), die in einen isothermen Wagen zum Transport (1) von Essenstabletts eingefügt werden, wobei das Verfahren umfasst:
* Bereitstellen mindestens eines isothermen Transportwagens (1), der eine Reihe von überlagerten Heizplatten (18) umfasst, die dazu konfiguriert sind, jeweils das individuelle Aufwärmen eines Essenstabletts (2), das in den isothermen Transportwagen eingefügt wurde, sicherzustellen,
* Steuern des Betriebs der Heizplatten (18), um das Aufwärmen der Essenstabletts sicherzustellen,
* Erfassen der Heizplatten (18), die verwendet werden, um das tatsächliche Aufwärmen der Essenstabletts sicherzustellen,
* und Zählen der Heizplatten (18), die verwendet werden, um das tatsächliche Aufwärmen der Essenstabletts auszuführen.

2. Verfahren nach Anspruch 1, wobei, um das Vorliegen eines Essenstabletts (2) zu erfassen, das dazu positioniert ist, um durch eine Heizplatte (18) aufgewärmt zu werden, die Entwicklung der Temperatur der Heizplatte analysiert wird.

3. Verfahren nach Anspruch 2, wobei die Entwicklung der Temperatur der Heizplatte (18) analysiert wird, indem sie mit mindestens einer Referenzentwicklung der Temperatur der Heizplatte verglichen wird.

4. Verfahren nach Anspruch 3, wobei die Entwicklung der Temperatur der Heizplatte (18) verglichen wird mit mindestens:
* einer Referenzentwicklung der Temperatur der Heizplatte, für die kein Essenstablett vorhanden ist,
* einer Referenzentwicklung der Temperatur der Heizplatte, für die das Essenstablett vorhanden ist,
* und einer Referenzentwicklung der Temperatur der Heizplatte, für die das Essenstablett keine aufzuwärmende Mahlzeit umfasst.

5. Verfahren nach einem der Ansprüche 1 bis 4, wobei der Betrieb aller Heizplatten (18) gesteuert wird, und der Betrieb der Heizplatten für jede davon unterbrochen wird, deren Entwicklung der Temperatur der Heizplatte nicht einer Referenzentwicklung der Temperatur der Heizplatte, bei der das Essenstablett vorhanden ist, entspricht.

6. Verfahren nach Anspruch 1, wobei für jede Heizplatte (18) vor der Betriebssteuerung derselben das Vorliegen eines Essenstabletts erfasst wird, das positioniert ist, um durch die Heizplatte erwärmt zu werden, und nur der Betrieb der Heizplatten gesteuert wird, bei denen die Essenstabletts (2) positioniert sind, um erwärmt zu werden.

7. Verfahren nach einem der vorhergehenden Ansprüche, wobei zum Erfassen der Heizplatten (18), die verwendet werden, um ein tatsächliches Aufwärmen der Essenstabletts auszuführen, die Heizplatten bestimmt werden, die während einer bestimmten Dauer verwendet werden und/oder eine bestimmte Temperatur erreichen.

8. Verfahren nach einem der vorhergehenden Ansprüche, wobei die Heizplatten bestimmt werden, die verwendet werden, um das tatsächliche Aufwärmen der Essenstabletts ausgehend von einer Betriebszeitdauer der Heizplatte, die zwischen 2 und 10 Minuten liegt, auszuführen.

9. Verfahren nach einem der vorhergehenden Ansprüche, wobei jeder isotherme Wagen (1) zum Transport von Essenstabletts an eine Verwaltungszentrale (27) die Anzahl von Heizplatten (18) überträgt, die verwendet werden, um ein tatsächliches Aufwärmen der Essenstabletts auszuführen.

10. Verfahren nach einem der vorhergehenden Ansprüche, wobei die Verwaltungszentrale (27) in Abhängigkeit von der Anzahl von Heizplatten (18), die verwendet werden, um ein tatsächliches Aufwärmen der Essenstabletts auszuführen, die Verwendungskosten des isothermen Transportwagens bestimmt.

11. Isothermer Wagen zum Transport von Essenstabletts, umfassend:
* eine isolierende Hülle (3), die innen mindestens ein Fach (8) begrenzt, das durch mindestens eine Tür (5) zugänglich ist,
* eine Trägerstruktur (11), die im Innern der Einhausung eingerichtet ist, um Essenstabletts (2) in überlagerter Position zu halten,
* eine Reihe von individuellen Platten (18) zum Erhitzen eines Essenstabletts, die durch die Trägerstruktur (11) an Ort und Stelle gehalten werden,
* ein System (20), um das Aufwärmen der Essenstabletts durch die Heizplatten (18) zu verwalten, wobei dieses System umfasst:
. eine Vorrichtung (21) für jede Heizplatte zum Erfassen des Vorliegens eines Essenstabletts, das positioniert ist, um durch die Heizplatte aufgewärmt zu werden,
. eine Kontrolleinheit (23), die konfiguriert ist zum Sicherstellen:
.. des Betriebs der Heizplatten (18), um das Aufwärmen der Essenstabletts sicherzustellen,
.. des Erfassens der Heizplatten (18), die verwendet werden, um das tatsächliche Aufwärmen der Essenstabletts auszuführen,
.. des Zählens der Heizplatten (18), die verwendet werden, um das tatsächliche Aufwärmen der Essenstabletts auszuführen.

12. Isothermer Wagen zum Transport von Essenstabletts nach dem vorhergehenden Anspruch, umfassend als Vorrichtung (21) zum Erfassen des Vorliegens eines Essenstabletts eine Temperatursonde (22), die jeder Heizplatte (18) zugeordnet ist und mit der Kontrolleinheit (23) verbunden ist, wobei die Kontrolleinheit (23) die Entwicklung der Temperatur der Heizplatte analysiert und sie mit mindestens einer Referenzentwicklung der Temperatur der Heizplatte vergleicht, um den Betrieb der Heizplatten sicherzustellen, um ein tatsächliches Aufwärmen der Essenstabletts mindestens für die Heizplatten, die mit einem Essenstablett versehen sind, sicherzustellen.

13. Isothermer Wagen zum Transport von Essenstabletts nach einem der Ansprüche 11 oder 12, wobei die Kontrolleinheit (23) eine Information über die Anzahl von Heizplatten liefert, die verwendet werden, um ein tatsächliches Aufwärmen der Essenstabletts auszuführen.

14. Isothermer Wagen zum Transport von Essenstabletts nach einem der Ansprüche 11 bis 13, wobei die Kontrolleinheit eine Schaltung (26) zur Kommunikation mit einer Verwaltungszentrale (27) umfasst.

15. Verwaltungsinstallation, um das Aufwärmen von Essenstabletts zu verwalten, die in mindestens einen isothermen Wagen (1) zum Transport von Essenstabletts (2) eingefügt sind, nach einem der Ansprüche 11 bis 14, wobei diese Installation mindestens eine Verwaltungszentrale (27) umfasst, die mit der Kommunikationsschaltung (26) mindestens eines isothermen Wagens zum Transport von Essenstabletts kommuniziert, um von dem Wagen mindestens die Information über die Anzahl von Heizplatten, die verwendet werden, um das tatsächliche Aufwärmen der Essenstabletts auszuführen, zu empfangen.

16. Installation nach dem vorhergehenden Anspruch, wobei die Verwaltungszentrale (27) für jeden isothermen Transportwagen (1) die Verwendungskosten des isothermen Transportwagens in Abhängigkeit von der Anzahl von Heizplatten (18), die verwendet werde, um das tatsächliche Aufwärmen der Essenstabletts auszuführen, bereitstellt.

## Claims

1. A method for managing the reheating of meal trays (2) inserted inside an isothermal transport trolley (1) for meal trays, the method comprising:
* providing at least one isothermal transport trolley (1), comprising a series of stacked heating plates (18) that are each configured to ensure the individual reheating of a meal tray (2) inserted inside the isothermal transport trolley,
* controlling the operation of the heating plates (18) to ensure the reheating of the meal trays,
* detecting the heating plates (18) used to effectively reheat the meal trays,
* and counting the heating plates (18) used to effectively reheat the meal trays.

2. The method according to claim 1, wherein, in order to detect the presence of a meal tray (2) positioned to be reheated by a heating plate (18), the change in temperature over time of the heating plate is analysed.

3. The method according to claim 2, wherein the change in temperature over time of the heating plate (18) is analysed by comparing it with at least one reference change over time of the temperature of the heating plate.

4. The method according to claim 3, wherein the change over time of the temperature of the heating plate (18) is compared with at least:
* a reference change over time in the temperature of the heating plate for which the meal tray is absent,
* a reference change over time in the temperature of the heating plate for which the meal tray is present,
* and a reference change over time in the temperature of the heating plate for which the meal tray does not contain any food to be reheated.

5. The method according to one of claims 1 to 4, wherein the operation of all the heating plates (18) is controlled and the operation of the heating plates is interrupted for each of them for which the change over time in the temperature of the heating plate does not correspond to a reference change over time in the temperature of the heating plate for which the meal tray is present.

6. The method according to claim 1, wherein, for each heating plate (18), the presence of a meal tray positioned to be reheated by the said heating plate is detected before it is controlled in operation, and only the heating plates for which the meal trays (2) are positioned to be reheated are controlled in operation.

7. The method according to one of the preceding claims, wherein, in order to detect the heating plates (18) used to effectively reheat the meal trays, the heating plates used for a specific period of time and/or reaching a specific temperature are determined.

8. The method according to one of the preceding claims, wherein the heating plates used to effectively reheat the meal trays are determined on the basis of an operating time of the heating plate of between 2 and 10 minutes.

9. The method according to one of the preceding claims, wherein each isothermal trolley (1) for transporting meal trays transmits, to a centralised management centre (27), the number of heating plates (18) used to effectively reheat meal trays.

10. The method according to one of the preceding claims, wherein the centralised management centre (27) determines the cost of using the isothermal transport trolley as a function of the number of heating plates (18) used to effectively reheat the meal trays.

11. An isothermal trolley for transporting meal trays, comprising:
* an insulating casing (3) internally defining at least one compartment (8) accessible via at least one door (5),
* a support structure (11) arranged inside the enclosure to hold meal trays (2) in a stacked position,
* a series of individual heating plates (18) for a meal tray held in position by the support structure (11),
* a system (20) for managing the reheating of meal trays by the heating plates (18), this system comprising:
.a device (21) for detecting, for each heating plate, the presence of a meal tray positioned to be reheated by said heating plate,
.a control unit (23) configured to ensure:
.. operation of the heating plates (18) to ensure the reheating of the meal trays,
.. detection of the heating plates (18) used to effectively reheat the meal trays,
.. counting of the heating plates (18) used to effectively reheat the meal trays.

12. The isothermal trolley for transporting meal trays according to the preceding claim comprising, as a device (21) for detecting the presence of a meal tray, a temperature sensor (22) associated with each heating plate (18) and connected to the control unit (23), the control unit (23) analysing the change over time in temperature of the heating plate and comparing it with at least one reference change over time in temperature of the heating plate, with a view to ensuring operation of the heating plates in order to ensure effective reheating of the meal trays, at least for the heating plates provided with a meal tray.

13. The isothermal trolley for transporting meal trays according to one of claims 11 or 12, wherein the control unit (23) delivers information on the number of heating plates used to effectively reheat the meal trays.

14. The isothermal trolley for transporting meal trays according to one of claims 11 to 13, wherein the control unit comprises a communication circuit (26) with a centralised management centre (27).

15. A management facility for managing the reheating of meal trays inserted inside at least one isothermal trolley (1) for transporting meal trays (2) in accordance with one of claims 11 to 14, this facility comprising at least one centralised management centre (27) communicating with the communication circuit (26) of at least one isothermal trolley for transporting meal trays, so as to receive from said trolley at least the information on the number of heating plates used to effectively reheat meal trays.

16. The facility according to the preceding claim, wherein the centralised management centre (27) provides, for each isothermal transport trolley (1), a cost of using the isothermal transport trolley as a function of the number of heating plates (18) used to effectively reheat the meal trays.
